# EUROPEAN PATENT SPECIFICATION

(11) **EP 2 562 303 B1**
(45) Date of publication and mention of the grant of the patent: **20.10.2021**
(21) Application number: 12181030.3
(22) Date of filing: 20.08.2012
(51) Int. Cl.: D06F 39/02

(54) **Washing machine having a water supply apparatus**
Waschmaschine mit Wasserversorgungsvorrichtung
Machine à laver dotée d'un appareil d'approvisionnement en eau

(30) Priority: 26.08.2011 KR 20110086079
(43) Date of publication of application: 27.02.2013
(73) Proprietor: Samsung Electronics Co., Ltd., Suwon-si, Gyeonggi-do, 443-742 (KR)
(72) Inventor: Lee, Song Yik, Gyeonggi-do (KR); Back, Dong Il, Gyeonggi-do (KR)
(74) Representative: Grünecker Patent- und Rechtsanwälte PartG mbB

(56) References cited:
- EP-A1- 0 504 545
- EP-A1- 1 541 740
- EP-A1- 1 568 815
- GB-A- 2 104 109
- GB-A- 2 271 783
- None

## Description

### BACKGROUND

### 1. Field

Embodiments of the present invention relate to a washing machine having a water supply apparatus which supplies water to a detergent supply apparatus.

### 2. Description of the Related Art

A washing machine is machinery which washes laundry using electric power, and includes a tub to store wash water, a drum rotatably installed within the tub, and a motor to rotate the drum. When the drum is rotated by the motor under the condition that laundry and wash water are placed within the drum, the laundry is washed due to friction of the laundry with the drum and the wash water.

A detergent supply apparatus of the washing machine serves to uniformly mix wash water supplied to the tub with detergents so as to supply the wash water mixed with the detergents to the tub.

The detergent supply apparatus includes a dispenser having a plurality of channels to supply water to the respective detergents, i.e., a main detergent, a fabric softer, a bleaching agent, etc. In order to supply water to the respective channels, a solenoid valve needs to be connected to the detergent supply apparatus by a plurality of rubber hoses, the detergent supply apparatus has a complicated structure and a large size. Further, since the solenoid valve is used, resonance noise is generated.

GB 2 271 783 A discloses a washing machine with a water flow distributor. The washing machine comprises a solenoid valve connected at its inlet to a source for warm water, and a further solenoid valve connected at its inlet to a source for cold water. The outlet of the solenoid valves are connected to corresponding separate inlets of the hydraulic distributor. The distributor is arranged in a distribution chamber and is controlled in such a way as to establish selectively a flow of water to one of its outlets. Therefore,by selectively controlling the solenoid valves and the distributor, a supply of hot or cold water, or a mixture of hot and cold water can be supplied to the washing chamber of the washing machine.

A drive unit generates a driving force to rotate the distributor.

EP 0 504 545 A1 discloses a control arrangement for a washing machine associated with a detergent dispenser. The dispenser comprises a flat conveying plate member with a number of channels or conduits. In one end of the corresponding conduits, a pass-through conduit is part of a rotating compartment selector means is arranged.

EP 1 541 740 A1 discloses a detergent dispenser for a washing machine. There is in particular a water distributor device and a dispenser wherein the water distributor device comprises a stepper nozzle.

EP 1 568 815 A1 discloses a washing machine with a detergent dispenser. A rotating selector of a water supply apparatus is used for supplying water for different channels.

GB 2 104 109 A discloses a unit for feeding wash liquid into a washing machine tub. The corresponding unit comprises a dispenser and a rotating element used for selectively supplying water to a number of channels. The rotating element has one nozzle and an element that is rotatable around a tube which is connected to a further tube to supply water.

### SUMMARY

It is an object of the present disclosure to provide a washing machine having a water supply apparatus of simple structure which supplies water to a detergent supply apparatus.

Additional aspects will be set forth in part in the description which follows and, in part, will be obvious from the description, or may be learned by practice of the invention.

The object is solved by the features of claim 1. Advantageous embodiments are disclosed by the sub claims.

The nozzle outlet may have a smaller area than the entrances of the plurality of channels to supply water to one of the plurality of channels.

The nozzle may include nozzle side walls forming both side surfaces of the inlet and the outlet, and the nozzle side walls may be formed in a curved line from the inlet to the outlet.

The drive unit may include a motor.

The drive unit may further include a plurality of gears disposed between the motor and the nozzle to transmit drive force of the motor to the nozzle.

The plurality of gears may include a first gear connected to the nozzle and rotated together with the nozzle, and a second gear connected to the motor and rotated by drive force of the motor.

The nozzle may be rotatably accommodated in the detergent supply apparatus, and the drive unit may be disposed on the upper surface of the detergent supply apparatus.

The rotation control device may include a cam connected to the drive unit to be rotated together with the drive unit and including at least one protruding rib protruding in the centrifugal direction, and a switch disposed to contact the cam and locked with and unlocked from the at least one protruding rib to generate an ON signal and an OFF signal when the cam is rotated.

The rotation control device may include a cam connected to the drive unit to be rotated together with the drive unit and including at least one groove disposed in the radial direction, and a switch disposed to contact the cam and locked with and unlocked from the at least one groove to generate an ON signal and an OFF signal when the cam is rotated.

The water supply apparatus may further include a rotation control device to control rotation of the drive unit to stop the nozzle in a designated direction to supply water.

The drive unit may include a motor to generate rotary force and at least one gear to transmit rotary force of the motor to the nozzle.

The drive unit may further include a rotation control device to control rotation of the motor.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a cross-sectional view of a washing machine in accordance with one embodiment of the present invention;
FIG. 2 is an exploded perspective view illustrating respective components of a detergent supply apparatus and a water supply apparatus of the washing machine in accordance with the embodiment of the present invention;
FIG. 3 is a perspective view illustrating connection of the respective components of FIG. 2;
FIG. 4 is an exploded perspective view illustrating respective components of a drive unit of FIG. 2;
FIG. 5 is a perspective view illustrating the water supply apparatus of the washing machine in accordance with the embodiment of the present invention;
FIGS. 6A and 6B are views illustrating operation of the water supply apparatus of the washing machine;
FIG. 7A is a view illustrating a rotation control device of a washing machine in accordance with one embodiment of the present invention;
FIG. 7B illustrates a graph representing signals transmitted by a switch of the rotation control device of FIG. 7A;
FIG. 8A is a view illustrating a rotation control device of a washing machine in accordance with another embodiment of the present invention;
FIG. 8B illustrates a graph representing signals transmitted by a switch of the rotation control device of FIG. 8A; and
FIG. 9A is a view illustrating a rotation control device of a washing machine in accordance with a further embodiment of the present invention; and
FIG. 9B illustrates graphs representing signals transmitted by switches of the rotation control device of FIG. 9A.

### DETAILED DESCRIPTION

Reference will now be made in detail to the embodiments of the present invention, examples of which are illustrated in the accompanying drawings, wherein like reference numerals refer to like elements throughout.

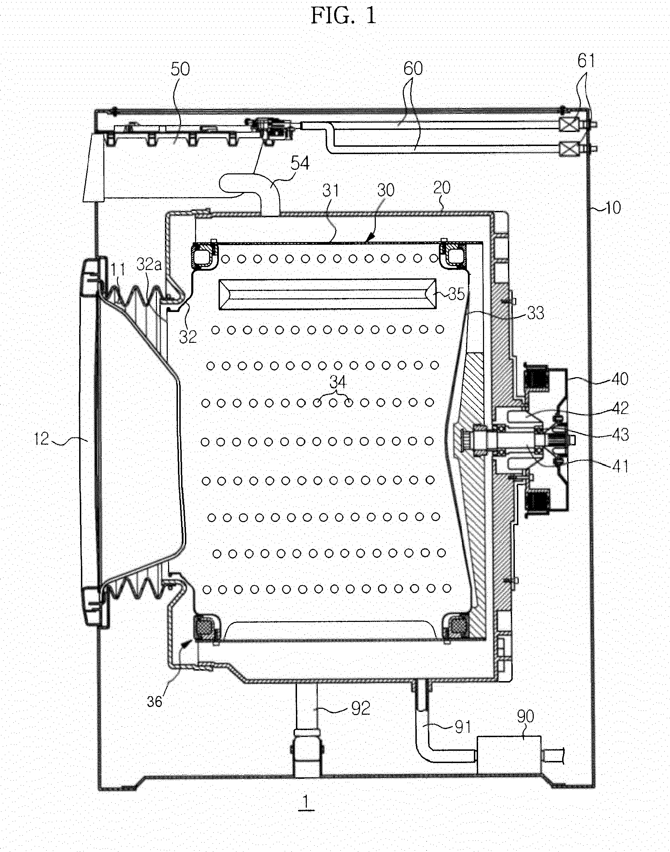

FIG. 1 is a cross-sectional view of a washing machine in accordance with one embodiment of the present invention.

As shown in FIG. 1, a washing machine 1 in accordance with this embodiment includes a cabinet 10 forming the external appearance of the washing machine 1, a tub 20 disposed within the cabinet 10, a drum 30 rotatably disposed within the tub 20, and a motor 40 to drive the drum 30.

An inlet 11 through which laundry is put into the drum 20 is formed on the front surface of the cabinet 10. The inlet 11 is opened and closed by a door 12 installed on the front surface of the cabinet 10.

The tub 20 is supported by a damper 92. The damper 92 is connected to the inner lower surface of the cabinet 10 and to the outer surface of the tub 20.

A drain pump 90 and a drain pipe 91 to discharge water in the tub 20 to the outside of the cabinet 10 are installed under the tub 20.

The drum 30 includes a cylindrical member 31, a front plate 32 disposed at the front portion of the cylindrical member 31, and a rear plate 33 disposed at the rear portion of the cylindrical member 31. An opening 32a through which laundry is put into and taken out of the drum 30 is formed through the front plate 32, and a drive shaft 41 to transmit power of the motor 40 is connected to the rear plate 33.

A plurality of through holes 34 to circulate wash water is provided on the circumference of the drum 30, and the inner space of the drum 30 and the inner space of the tub 20 communicate with each other by the through holes 34.

A plurality of lifters 35 to tumble laundry when the drum 30 is rotated is installed on the inner circumferential surface of the drum 30.

The drive shaft 41 is disposed between the drum 30 and the motor 40. One end of the drive shaft 41 is connected to the rear plate 33 of the drum 30, and the other end of the drive shaft 41 extends to the outside of the rear wall of the tub 20. When the motor 40 drives the drive shaft 41, the drum 30 connected to the drive shaft 41 is rotated about the drive shaft 41.

A bearing housing 42 to rotatably support the drive shaft 41 is installed on the rear wall of the tub 20. The bearing housing 42 may be formed an aluminum alloy, and be inserted into the rear wall of the tub 20 when the tub 20 is produced through injection molding. Bearings 43 to facilitate rotation of the drive shaft 41 are installed between the bearing housing 42 and the drive shaft 41.

During a washing cycle, the motor 40 rotates the drum 30 at a low velocity in a regular direction and in the reverse direction, and thereby tumbling of the laundry within the drum 30 is repeated, thus removing contaminants from the laundry.

During a spin-drying cycle, when the motor 40 rotates the drum at a high velocity in one direction, water is separated from the laundry by centrifugal force applied to the laundry.

When the laundry is not uniformly distributed within the drum 30 and is concentrated into a specific region during rotation of the drum 30 in the spin-drying process, unbalanced load occurs within the drum 30, and thus rotation of the drum 30 becomes instable and vibration and noise occur.

Therefore, the washing machine 1 is provided with balancers 36 to stabilize rotation of the drum 30. Here, a pair of balancers 36 is formed on the front plate 32 and the rear plate 33 of the drum 30.

Water supply pipes 60 to supply wash water to the tub 20 are installed above the tub 20. One end of each of the water supply pipes 60 is connected to an external water supply source (not shown), and the other end of each of the water supply pipes 60 is connected to a detergent supply apparatus 50.

The detergent supply apparatus 50 is connected to the tub 20 through a connection pipe 54. Water supplied through the water supply pipe 60 is supplied to the detergent supply apparatus 52 and is mixed with detergents in the detergent supply apparatus 52, and the water mixed with the detergents is supplied to the inside of the tub 20.

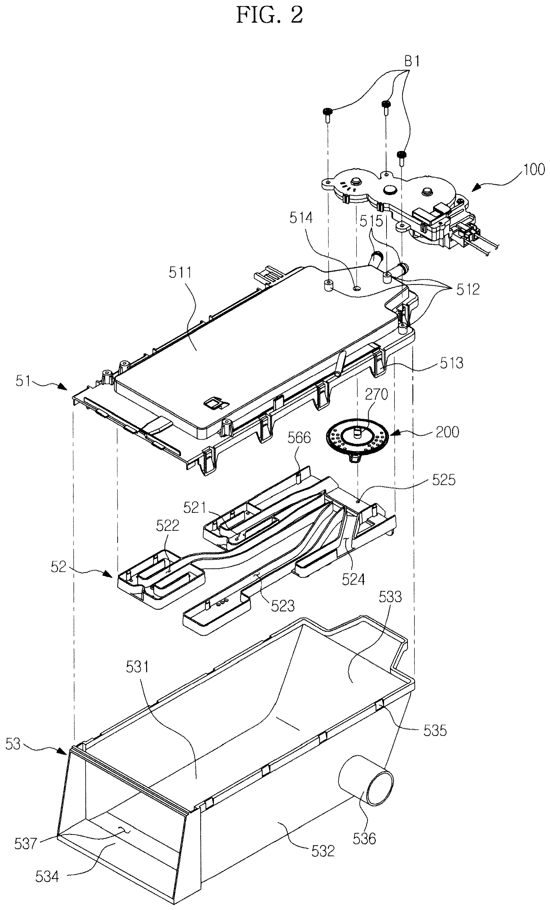

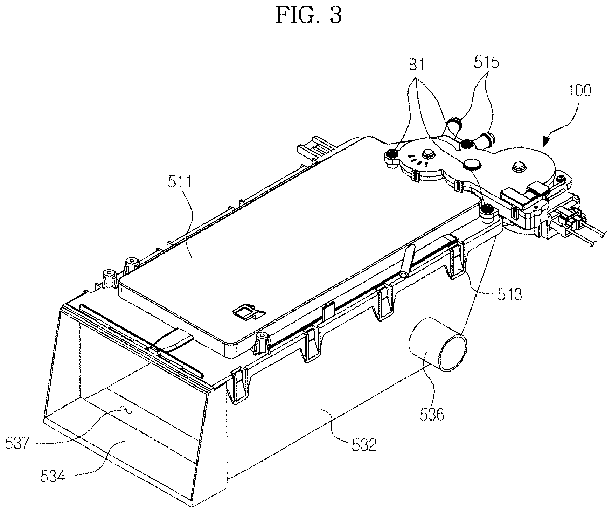

FIG. 2 is an exploded perspective view illustrating respective components of the detergent supply apparatus and a water supply apparatus of the washing machine in accordance with the embodiment of the present invention, and FIG. 3 is a perspective view illustrating connection of the respective components of FIG. 2.

As shown in FIGS. 2 and 3, the detergent supply apparatus 50 includes a detergent case 53 forming the external appearance of the detergent supply apparatus 50, a detergent case cover 51 disposed to cover the upper portion of the detergent case 53, and a dispenser 52 disposed between the detergent case 53 and the detergent case cover 51.

The water supply apparatus includes a nozzle 200 rotatably disposed between the detergent case cover 51 and the dispenser 52, and a drive unit 100 to supply drive force to rotate the nozzle 200.

The detergent case 53 includes a bottom surface 531, side walls 532 protruding upwards from the bottom surface 531 to form both side surfaces of the detergent case 53, and a rear plate 533 bent upwards from the bottom surface 531 in a gentle curved line to form a rear surface of the detergent case 53.

A plurality of first accommodation parts 535 to accommodate first connection parts 531 of the detergent case cover 51, which will be described later, to connect the detergent case cover 51 to the detergent case 53 is formed on the side walls 532. The embodiment illustrated in the drawings describes eight first accommodation parts 535.

A front frame 534 provided with an opening 537 is located at the front surface of the detergent case 53, and is connected to the bottom surface 531 and the side walls 532. Detergent containers (not shown) accommodating detergents are accommodated in the opening 537.

The upper surface of the detergent case 53 is opened.

The detergent case cover 51 covers the opened upper surface of the detergent case 53, thus forming the external appearance of the detergent supply apparatus 50 together with the detergent case 53. Although the embodiment illustrated in the drawings describes the detergent case cover 51 as having a central portion protruding upwards to form a 2-step structure, the detergent case cover 51 may have other multi-step structures.

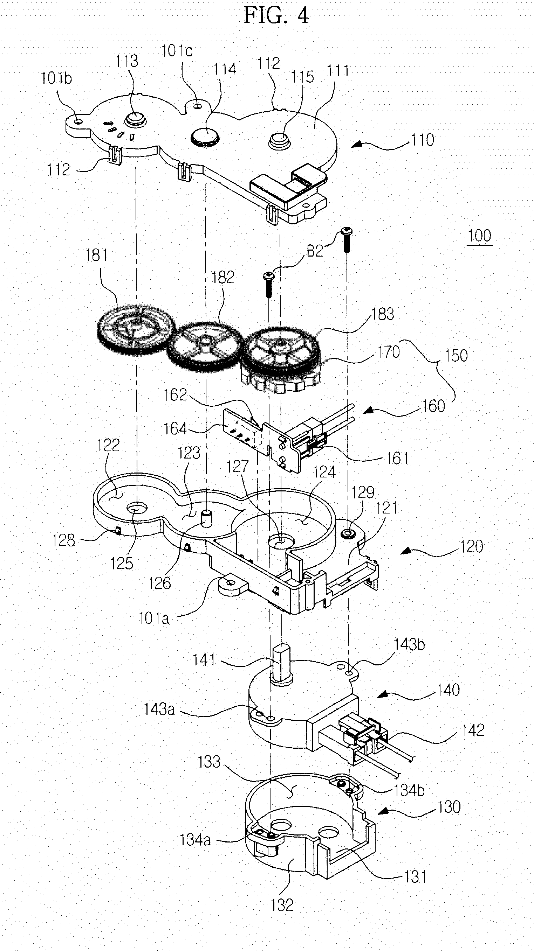

Three first connection recesses 512 are formed on an upper plate 511 of the detergent case cover 51 so as to connect the drive unit 100 to the upper plate 511. First connection holes 101a, 101b and 101c are formed at positions of the drive unit 100 corresponding to the first connection recesses 512. When bolts B1 pass through the first connection holes 101a, 101b and 101c and are fastened to the first connection recesses 512, the drive unit 100 is connected to the upper plate 511 of the detergent case cove 51. The drive unit 100 will be described later with reference to FIG. 4.

Connection pipes 515 to which the water supply pipes 60 (with reference to FIG. 1) are connected protrude from the rear portion of the detergent case cover 51. FIGS. 2 and 3 illustrate two connection pipes 515 to which a warm water supply pipe and a cold water supply pipe are respectively connected.

The dispenser 52 includes plural channels 521, 522, 523 and 524, and the plural channels 521, 522, 523 and 524 form the external appearance of the dispenser 52. The detergent containers (not shown) accommodate a main detergent, a fabric rinse, a bleaching agent, etc., and in order to separately supply water thereto, the plural channels 521, 522, 523 and 524 are formed.

The dispenser 52 includes second connection parts 566, and is connected to the detergent case cover 51 by fastening the second connection parts 566 to connection recesses (not shown) of the detergent case cover 51.

A second accommodation hole 525 in which one end of a shaft 270 of the nozzle 200 is accommodated is formed at the rear portion of the dispenser 52. Further, a first accommodation hole 514 in which the other end of the shaft 270 of the nozzle 200 is accommodated is formed at a portion of the upper plate 511 of the detergent case cover 51 corresponding to the second accommodation hole 525.

The nozzle 200 is disposed between the dispenser 52 and the detergent case cover 51 under the condition that one end of the shaft 270 is accommodated in the second accommodation hole 525 and the other end of the shaft 270 is accommodated in the first accommodation hole 514. When the dispenser 52 is connected to the detergent case cover 51, the nozzle 200 is located between the dispenser 52 and the detergent case cover 51 so as to be rotated about the shaft 270.

First connection parts 513 are formed at positions of the side surfaces of the detergent case cover 51 corresponding to the first accommodation parts 535. FIGS. 2 and 3 illustrate eight first connection parts 513 corresponding to the number of the first accommodation parts 535. The first connection parts 513 protrude the side surfaces of the detergent case cover 51 in the direction towards the detergent case 53, and the ends of the fist connection parts 513 protrude inwards to be fixed to the first accommodation parts 535.

Therefore, when the protruding ends of the first connection parts 513 are accommodated in the first accommodation parts 535, the detergent case cover 51 is connected to the detergent case 53.

FIG. 4 is an exploded perspective view illustrating respective components of the drive unit of FIG. 2.

As shown in FIG. 4, the drive unit 100 includes a motor 140 to generate drive force, a motor case 130 to accommodate the motor 140, plural gears 181, 182 and 183 to transmit drive force of the motor to the nozzle 20 (with reference to FIG. 2), a gear case 120 to accommodate the plural gears 181, 182 and 183, a gear cover 110 connected to the gear case 120 to cover the plural gears 181, 182 and 183, and a rotation control device 150 to control rotation of the motor 140.

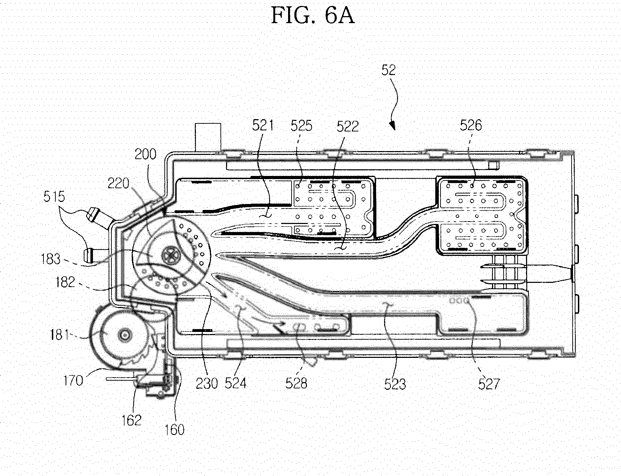

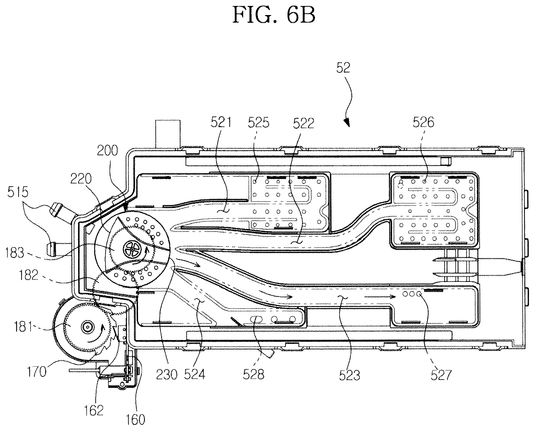

The rotation control device 150 includes a cam 170, and a printed circuit board (PCB) assembly 160 sensing a degree of rotation of the cam 170 to control the motor 140. The rotation control device 150 will be described later with reference to FIG. 6.

The gear case 120 includes a case main body 121 forming the external appearance of the gear case 120, gear accommodation parts 122, 123 and 124 protruding upwards from the case main body 121 to accommodate the plural gears 181, 182 and 183, and a PCB accommodation part 165 protruding upwards from the case main body 121 to accommodate the PCB assembly 150.

The plural gears 181, 183 and 183 include a first gear 181, a second gear 183 and a third gear 182. Although the embodiment illustrated in the drawings describes three gears, more or less than three gears may be provided. However, three or four gears may be provided in consideration of the sizes of the gears and the size of the water supply apparatus.

The first gear 181 includes its own shaft and is accommodated in the first gear accommodation part 122 of the gear case 120. The first gear accommodation part 122 is provided with a first shaft accommodation hole 125 to accommodate the shaft of the first gear 181. The first gear 181 is connected to the nozzle 200 (with reference to FIG. 2) through the shaft, thus being rotated together with the nozzle 200.

The second gear 183 includes its own shaft and is accommodated in the second gear accommodation part 124 of the gear case 120. The second gear accommodation part 124 is provided with a second shaft accommodation hole 127 to accommodate the shaft of the second gear 183. The second gear 183 is connected to the cam 170 through the shaft, thus being rotated together with the cam 170. Further, the second gear 183 and the cam 170 are connected to a shaft 141 of the motor 140 located thereunder, thus being rotated by drive force of the motor 140.

The third gear 182 includes a hollow formed at the center of rotation thereof and is accommodated in the third gear accommodation part 123 of the gear case 120. The third gear accommodation part 123 is provided with a protruding rotation shaft 126 which is inserted into the hollow of the third gear 182. When the rotation shaft 126 is inserted into the hollow of the third gear 182, the third gear 182 is accommodated in the third gear accommodation part 123. The third gear 182 is disposed between the first gear 181 and the second gear 183 so as to be engaged with the first gear 181 and the second gear 183. Therefore, the third gear 182 receives drive force of the motor 140 through the second gear 183, and transmits the drive force to the first gear 181 and the nozzle 200 (with reference to FIG. 2).

A first shaft accommodation recess 113 protruding upwards to accommodate the shaft of the first gear 181 and a second shaft accommodation recess 115 protruding upwards to accommodate the shaft of the second gear 183 are formed on the lower surface of the gear cover 110. Further, a third shaft accommodation recess 114 protruding upwards to accommodate the rotation shaft 126 inserted into the hollow of the third gear 182 is formed on the lower surface of the gear cover 110.

Connection protrusions 128 connected to the gear cover 110 are formed on the side surface of the gear case 120. Second fastening parts 112 protruding downwards to accommodate the connection protrusions 128 are formed on the side surface of the gear cover 110. When the connection protrusions 128 are fastened to the second fastening parts 112, the gear cover 110 is connected to the gear case 120.

The motor case 130 and the motor 140 are connected under the gear case 120.

The motor case 130 includes a bottom surface 131, and a side surface 132 having the same shape of the motor 140 and protruding upwards from the bottom surface 131. A load part 133 on which the motor 140 is loaded is formed at the inside of the side surface 132.

The motor 140 includes a power supply unit 142 connected to one side of the motor 140 to supply power to the motor 140, the shaft 141 passing through the second shaft accommodation hole 127 and connected to the second gear 183 and the cam 170 to transmit drive force of the motor 140 to the second gear 183 and the cam 170, and third fastening holes 143a and 143b to connect the motor 140 to the gear case 120 and the motor case 130.

Bolts B2 pass through second connection holes 129 (here, only one second connection hole is illustrated) formed at one side of the gear case 120 and the third fastening holes 143a and 143b formed on the motor 140 and are fastened to second connection recesses 134a and 134b formed at one side of the motor case 130, thereby connecting the gear case 120, the motor 140 and the motor case 130.

In order to connect the drive unit 100 to the detergent case cover 51, as described above, the first fastening holes 101a, 101b and 101c are formed on the drive unit 100. The embodiment illustrated in the drawings describes three first fastening holes 101a, 101b and 101c, two fastening holes 101b and 101c are formed at one side of the gear cover 110, and one fastening hole 101a is formed on the gear case 120.

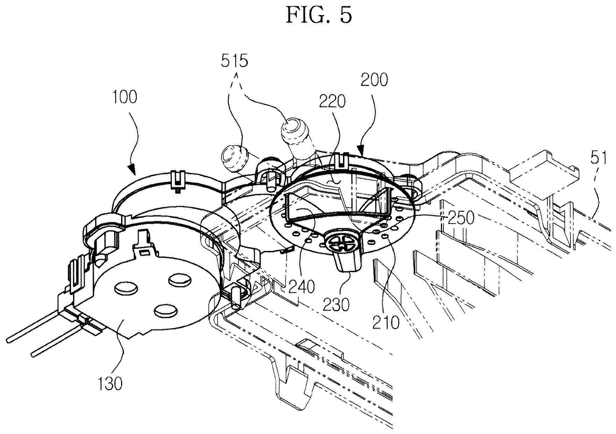

FIG. 5 is a perspective view illustrating the water supply apparatus of the washing machine in accordance with the embodiment of the present invention.

A description of the above-described drive unit 100 and gear cover 110 will be omitted.

As shown in FIG. 5, the nozzle 200 includes a nozzle main body 210 connected to the cam 170 (with reference to FIG. 4) to rotate the nozzle 200, nozzle side walls 240 protruding downwards from the nozzle main body 210 to form both side surfaces of the nozzle 200, and a nozzle bottom surface 250 connecting both nozzle side walls 240. A hollow in which water flows is formed within a space formed by the nozzle side walls 240 and the nozzle bottom surface 250. An inlet 220 through which water supplied from the water supply pipe 60 (with reference to FIG. 1) is introduced into the nozzle 200 is formed at one side of the hollow, and an outlet 230 through which water is discharged to the dispenser 52 is formed at the other side of the hollow.

FIGS. 6A and 6B are views illustrating operation of the water supply apparatus of the washing machine. Particularly, in order to describe rotating states of the nozzle 200, FIGS. 6A and 6B illustrate the detergent case cover 51 to which the dispenser 52 and the nozzle 200 are connected, as seen from the bottom.

FIG. 6A illustrates the nozzle 200 which supplies water towards the first channel 524, and FIG. 6B illustrates the nozzle 200 which supplies water towards the second channel 523.

As shown in FIGS. 6A and 6B, the cam 170 and the first gear 181 connected to the motor 140 (with reference to FIG. 4) are rotated in the counterclockwise direction. Although FIGS. 6A and 6B illustrate the cam 170 and the first gear 181 as being rotated in the counterclockwise direction, the cam 170 and the first gear 181 are rotated in the clockwise direction, as seen from the top. Further, when arrangement and shapes of the cam 170 and a switch 162 are changed, the cam 170 and the first gear 181 may be rotated in the clockwise direction.

When the cam 170 and the first gear 181 are rotated in the counterclockwise direction, the third gear 182 engaged with the first gear 181 is rotated in the clockwise direction, and the second gear 183 engaged with the third gear 182 is rotated in the counterclockwise direction.

The nozzle 200 first supplies water towards the first channel 524, as shown in FIG. 6A, and when the nozzle 200 is rotated, the nozzle 200 supplies water towards the second channel 523, as shown in FIG. 6B. Then, the nozzle 200 is rotated in such a manner, thereby supplying water towards the third channel 522 and the fourth channel 521.

Water supplied to the respective channels 521, 522, 523 and 524 is discharged to the detergent case 53 through discharge holes 525, 526, 527 and 528 provided at one end of each of the channels 521, 522, 523 and 524.

Although the nozzle 200 is rotated, both connection pipes 515 may supply water towards the wide inlet 220. As described above, the warm water supply pipe is connected to one of the two connection pipes 515, and the cold water supply pipe is connected to the other of the two connection pipes 515.

Therefore, while the conventional water supply apparatus requires many connection pipes to supply cold water and warm water to all of channels of a dispenser, the water supply apparatus 50 in accordance with the present invention may supply cold water and warm water to all of the plural channels 521, 522, 523 and 524 through a simple structure.

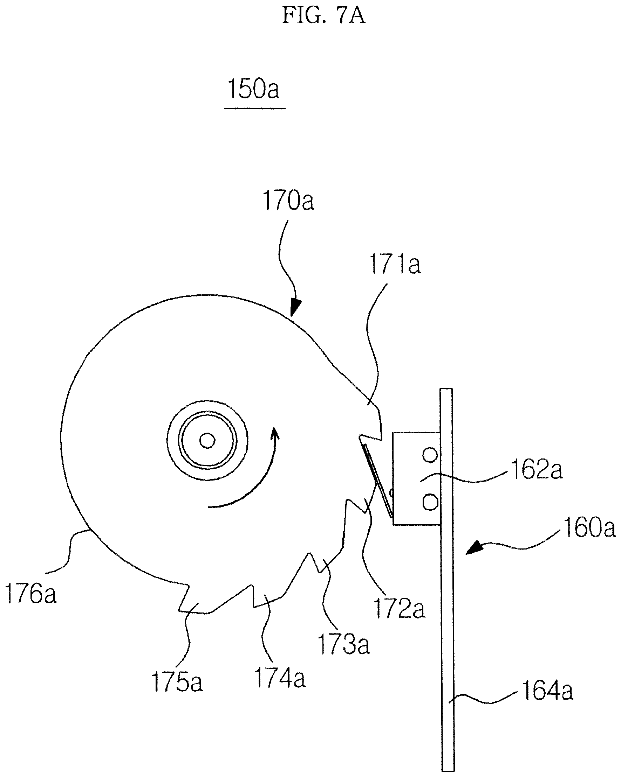

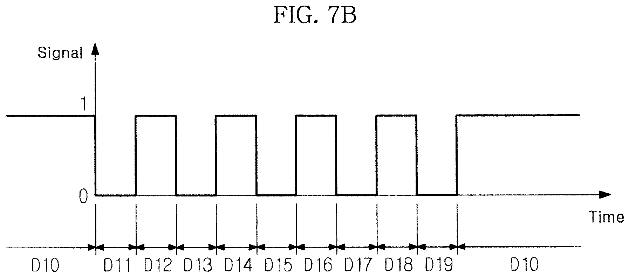

FIG. 7A is a view illustrating a rotation control device of a washing machine in accordance with one embodiment of the present invention, and FIG. 7B illustrates a graph representing signals transmitted by a switch of the rotation control device of FIG. 7A.

In order to coincide with the rotating direction of the nozzle in FIGS. 6A and 6B, FIG. 7A illustrates the cam, as seen from the bottom.

As shown in FIG. 7A, a rotation control device 150a includes a cam 170a and a PCB assembly 160a. The PCB assembly 160a includes a PCB 164a, and a switch 162a mounted on one surface of the PCB 164a to contact the cam 170a.

The cam 170a includes a disc-shaped cam main body 176a, and five protruding ribs 171a, 172a, 173a, 174a and 175a.

The nozzle 200 (with reference to FIG. 2) is disposed at the lower end of the cam 170a, and is rotated together with the cam 170a.

The cam 170a and the nozzle 200 are disposed such that when the switch 162a is located between the first protruding rib 171a and the second protruding rib 172a, the outlet 230 of the nozzle 200 faces the first channel 524, when the switch 162a is located between the second protruding rib 172a and the third protruding rib 173a, the outlet 230 of the nozzle 200 faces the second channel 523, when the switch 162a is located between the third protruding rib 173a and the fourth protruding rib 174a, the outlet 230 of the nozzle 200 faces the third channel 522, and when the switch 162a is located between the fourth protruding rib 174a and the fifth protruding rib 175a, the outlet 230 of the nozzle 200 faces the fourth channel 521.

The switch 162a contacts the cam 170a. When the cam 170a is rotated in the counterclockwise direction and the switch 162a is pressed by the protruding ribs 171a, 172a, 173a, 174a and 175a, the switch 162a generates a signal '0', and when the switch 162a is located between the protruding ribs 171a, 172a, 173a, 174a and 175a, the switch 162a generates a signal '1'.

As shown in FIG. 7B, a section D11 in which the signal '1' is continuously generated and then the signal '0' is initially generated corresponds to a position where the first protruding rib 171a presses the switch 162a. In such a manner, a position where the second protruding rib 172a is adjacent to the switch 162a corresponds to a section D13 in which the signal '0' is secondarily generated, a position where the third protruding rib 173a is adjacent to the switch 162a corresponds to a section D15 in which the signal '0' is thirdly generated, a position where the fourth protruding rib 174a is adjacent to the switch 162a corresponds to a section D17 in which the signal '0' is fourthly generated, and a position where the fifth protruding rib 175a is adjacent to the switch 162a corresponds to a section D19 in which the signal '0' is fifthly generated.

When the cam main body 176a is adjacent to the switch 162a, the signal '1' is generated for a long time, and thus a position where the cam main body 176a is adjacent to the switch 162a corresponds to a section D10.

As described above, in a stopped state of the cam 170a, the resolution value of a degree of rotation of the cam 170a is not measured. The signal '1' is generated for a long time during rotation of the cam 170a and then the signal '0' is initially generated (the section D11). Thereafter, a point of time when the rotating cam 170a faces one direction may be measured by judging the number of times that the signal '1' is generated.

Accordingly, prior to start of operation, the cam 170a needs to be rotated to the initial position, i.e., the position where the first protruding rib 171a presses the switch 162a. That is, the stopped cam 170a is rotated until the signal '1' is generated for a long time and then the signal '0' is initially generated.

For example, in order to supply water to the third channel 522 (with reference to FIG. 6A), the cam 170a is disposed so that the switch 162a contacts the region between the third protruding rib 173a and the fourth protruding ribt 174a. First, the cam 170a is rotated, and thus the signal generated by the switch 162a is sensed. When the signal '1' is generated for a long time (the section D10) and then the signal '0' is initially generated, it is judged that the cam 170a is located such that the first protruding rib 171a corresponding to the initial position is adjacent to the switch 162a. Rotation of the cam 170a is stopped at a point of time when the signal '1' is thirdly sensed starting from rotation of the cam 170a at the initial position (the section D16). Then, the cam 170a is located such that the switch 162a contacts the region between the third protruding rib 173a and the fourth protruding rib 174a, and the outlet 230 (with reference to FIG. 6A) of the nozzle 200 (with reference to FIG. 6A) faces the third channel 522 (with reference to FIG. 6A). Therefore, when water is supplied from the water supply pipe 60, the water is supplied to the third channel 522 through the nozzle 200.

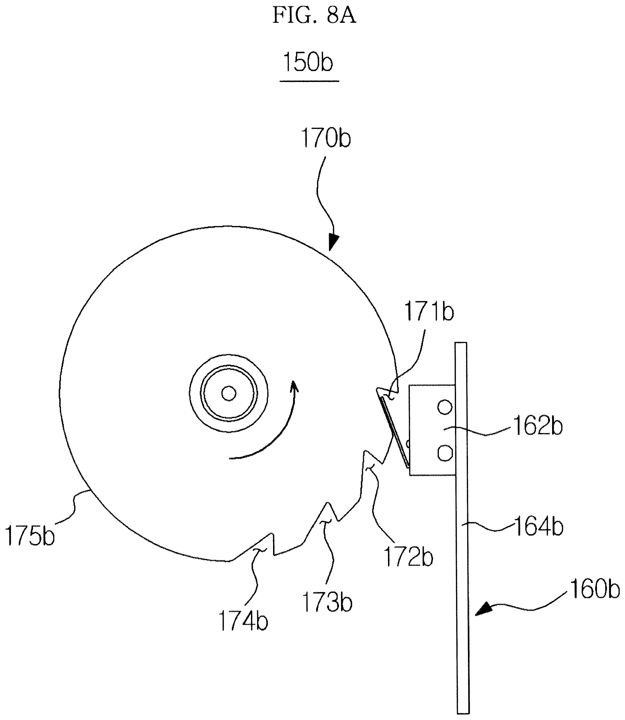

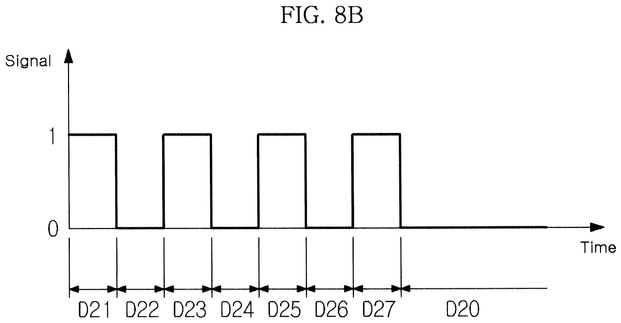

FIG. 8A is a view illustrating a rotation control device of a washing machine in accordance with another embodiment of the present invention, and FIG. 8B illustrates a graph representing signals transmitted by a switch of the rotation control device of FIG. 8A.

In order to coincide with the rotating direction of the nozzle in FIGS. 6A and 6B, FIG. 8A illustrates the cam, as seen from the bottom.

As shown in FIG. 8A, a rotation control device 150b includes a cam 170b and a PCB assembly 160b. The PCB assembly 160b includes a PCB 164b, and a switch 162b.

The cam 170b is the same as the cam 170a of FIG. 7A in that the cam 170b includes a disc-shaped cam main body 175b, but includes four grooves 171b, 172b, 173b and 174b other than protruding ribs.

The cam 170b and the nozzle 200 are disposed such that when the switch 162b contacts the first groove 171b, the outlet 230 of the nozzle 200 (with reference to FIG. 2) faces the first channel 524, when the switch 162b contacts the second groove 172b, the outlet 230 faces the second channel 523, when the switch 162b contacts the third groove 173b, the outlet 230 faces the third channel 522, and when the switch 162b contacts the fourth groove 174b, the outlet 230 faces the fourth channel 521.

When the cam 170b is rotated in the counterclockwise direction and the switch 162b contacts the grooves 171b, 172b, 173b and 174b, the switch 162b generates a signal '1', and when the cam 170a is located at other positions, the switch 162b generates a signal '0'.

As shown in FIG. 8B, a section D21 in which the signal '1' is initially generated corresponds to a position where the switch 162b contacts the first groove 171b. In such a manner, a position where the switch 162b contacts the second groove 172b corresponds to a section D23 in which the signal '1' is secondarily generated, a position where the switch 162b contacts the third groove 173b corresponds to a section D25 in which the signal '1' is thirdly generated, and a position where the switch 162b contacts the fourth groove 174b corresponds to a section D27 in which the signal '1' is fourthly generated. A position where the switch 162b contacts the cam main body 175b corresponds to a section D20 in which the signal '0' is generated for a long time, and when the switch 162b passes by the section D20, the switch 162b again enters the section D21.

In the same manner as the embodiment of FIGS. 7A and 7B, in this embodiment, only relative positions of other positions with respect to the initial position (the section D21) may be detected. Accordingly, prior to start of operation, the cam 170b needs to be rotated to the initial position (the section D21).

Such rotation is the same as that in the embodiment of FIGS. 7A and 7B, and a detailed description thereof will thus be omitted.

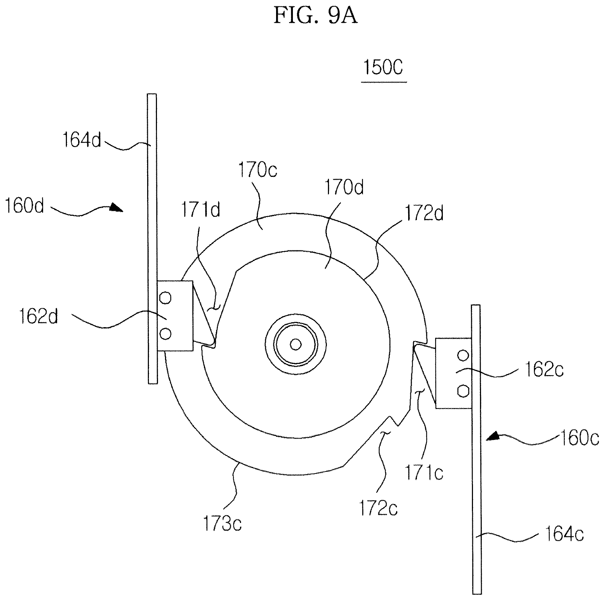

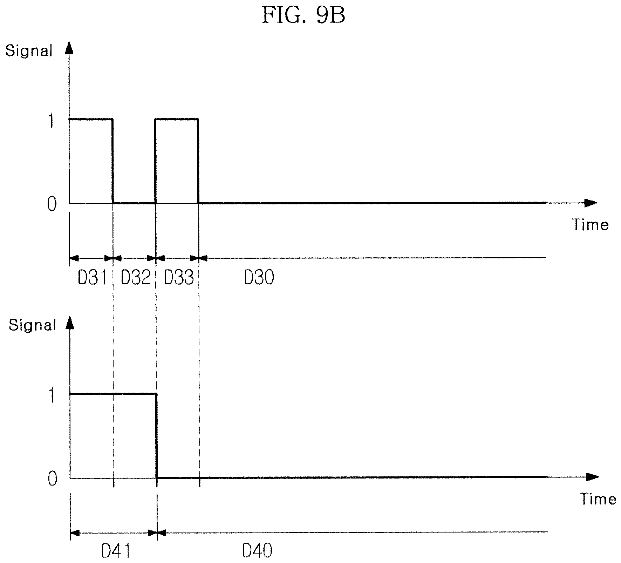

FIG. 9A is a view illustrating a rotation control device of a washing machine in accordance with a further embodiment of the present invention, and FIG. 9B illustrates graphs representing signals transmitted by switches of the rotation control device of FIG. 9A.

In order to coincide with the rotating direction of the nozzle in FIGS. 6A and 6B, FIG. 9A illustrates the cam, as seen from the bottom.

As shown in FIG. 9A, a rotation control device 150c includes a first cam 170c, a second cam 170d, and two PCB assemblies 160c and 160d corresponding to the respective cams 170c and 170d.

The first PCB assembly 160c includes a PCB 164c, and a first switch 162c mounted on one surface of the PCB 164c to contact the first cam 170c.

The second PCB assembly 160d includes a PCB 164d, and a second switch 162d mounted on one surface of the PCB 164d to contact the second cam 170d.

The first cam 170c includes a disc-shaped first cam main body 173c, and a first groove 171c and a second groove 172c formed on the first cam main body 173c.

The second cam 170d includes a disc-shaped second cam main body 173d, and a third groove 171d formed on the second cam main body 173d.

The first cam 170c and the second cam 170d are connected to each other and are rotated together.

In FIG. 9B, the upper graph illustrates signals generated by the first switch 170c, and the lower graph illustrates signals generated by the second switch 170d.

When the cams 170d and 170d are rotated in the counterclockwise direction and the switches 162c and 162d contact the grooves 171c, 172c and 171d, the switches 162c and 162d generate a signal '1', and when the cams 170d and 170d are located at other positions, the switches 162c and 162d generate a signal '0'.

If the first cam 170c and the second cam 170d are disposed, as shown in FIG. 9A, four positions may be defined.

A first position corresponds to the case in which the first switch 162c contacts the first groove 171c and the second switch 162d contacts the third groove 171d, as shown in FIG. 9A. At the first position, both the first switch 162c and the second switch 162d generate the signal '1'. That is, the first position may be expressed as [1,1].

A second position corresponds to the case in which the first switch 162c contacts a region between the first groove 171c and the second groove 172c and the second switch 162d contacts the third groove 171d. At the second position, the first switch 162c generates the signal '0' and the second switch 162d generates the signal '1'. That is, the second position may be expressed as [0,1].

A third position corresponds to the case in which the first switch 162c contacts the second groove 172c and the second switch 162d contacts the second cam main body 172d. At the third position, the first switch 162c generates the signal '1' and the second switch 162d generates the signal '0'. That is, the third position may be expressed as [1,0].

A fourth position corresponds to the case in which the first switch 162c contacts the first cam main body 173c and the second switch 162d contacts the second cam main body 172d. At the fourth position, both the first switch 162c and the second switch 162d generate the signal '0'. That is, the fourth position may be expressed as [0,0].

That is, differently from the above-described embodiments, in this embodiment, pairs of signals generated at the four positions are defined so that the current direction of the nozzle 200 (with reference to FIG. 2) connected to the cams 170c and 170d may be precisely measured. Therefore, rotation of the nozzle 200 (with reference to FIG. 2) may be controlled by disposing the cams 170c and 170d so as to allow the nozzle 200 to face a designated direction at each of the respective positions.

Although the embodiments describe the configuration and operation of the water supply apparatus as being applied the drum washing machine, the configuration and operation of the water supply apparatus may be applied to other washing machines including a pulsator washing machine.

As is apparent from the above description, a water supply apparatus in accordance with one embodiment of the present invention reduces the number of water supply hoses using a rotatable nozzle, thereby simplifying the structure of the water supply apparatus.

The water supply apparatus reduces the size of a detergent supply apparatus, thereby reducing a space within a washing machine.

The water supply apparatus using the nozzle supplies warm water and cold water to all of plural channels through a simple structure.

Although a few embodiments of the present invention have been shown and described, it would be appreciated by those skilled in the art that changes may be made in these embodiments without departing from the invention, the scope of which is defined in the claims.

## Claims

1. A washing machine (1) with a drum (30) to accommodate laundry, a detergent supply apparatus (50) including a detergent case (53) forming the external appearance of the detergent supply apparatus (50), a detergent case cover (51) disposed to cover the upper portion of the detergent case (53), and a dispenser (52) disposed between the detergent case (53) and the detergent case cover (51), wherein the dispenser (52) is provided with a plurality of channels (521, 522, 523, 524) to supply water to a plurality of detergents to be supplied to the drum (30) and a water supply apparatus comprising:
two water supply pipes (60) one being a warm water supply pipe and the other being a cold water supply pipe, extending from a rear portion of the washing machine (1) to the detergent supply apparatus (50) to supply cold and warm water to the dispenser;
a nozzle (200) provided with one end connected to the water supply pipes (60) and the other end disposed adjacent to entrances of the plurality of channels (521 to 524) and being rotatable to supply water selectively to one of the plurality of channels;
a drive unit (100) generating drive force to rotate the nozzle (200), and
a rotation control device (150) to control rotation of the drive unit, wherein the nozzle (200) includes
a wide single inlet (220) provided adjacent to the two water supply pipes (60) such that water is introduced into the nozzle through the inlet (220), and a single outlet (230) to supply water to one of the plurality of channels (521 to 524), which inlet (220) has an area greater than the single outlet (230) and sufficient to cover two connection pipes (515) to which the two water supply pipes (60) are connected , the connection pipes (515) protruding from the rear portion of the detergent case cover (51), wherein the warm water supply pipe is connected to one of the two connection pipes (515) and the cold water supply pipe is connected to the other of the two connection pipes (515), so as to allow cold water and warm water supplied from the two water supply pipes to be introduced into the nozzle (200) through the wide single inlet (220) and out of the nozzle (200) by the single outlet (230) to each one of the channels (521 to 524), selectively.

2. The washing machine according to claim 1, wherein the outlet (230) has a smaller area than the entrances of the plurality of channels to supply water to one of the plurality of channels.

3. The washing machine according to claim 1, wherein:
the nozzle (200) includes nozzle side walls (240) forming both side surfaces of the inlet (220) and the outlet (230); and
the nozzle side walls (240) are formed in a curved line from the inlet to the outlet.

4. The washing machine according to claim 1, wherein the drive unit (100) includes a

5. The washing machine according to claim 4, wherein the drive unit (100) further includes a plurality of gears (181 to 183) disposed between the motor (140) and the nozzle (200) to transmit drive force of the motor to the nozzle.

6. The washing machine according to claim 5, wherein the plurality of gears includes:
a first gear (181) connected to the nozzle (200) and rotated together with the nozzle; and
a second gear (183) connected to the motor (140) and rotated by drive force of the motor.

7. The washing machine according to claim 1, wherein:
the nozzle (200) is rotatably accommodated in the detergent supply apparatus (50); and
the drive unit (100) is disposed on the upper surface of the detergent supply apparatus (50).

8. The washing machine according to claim 1, wherein the rotation control device (150) includes:
a cam (170) connected to the drive unit (100) to be rotated together with the drive unit, and including at least one protruding rib (171a to 175a) protruding in the centrifugal direction; and
a switch (162, 162a, 162b, 162c, 162d) disposed to contact the cam (170), and locked with and unlocked from the at least one protruding rib (171a to 175a) to generate an ON signal and an OFF signal when the cam is rotated.

9. The washing machine according to claim 1, wherein the rotation control device (150) includes:
a cam (170) connected to the drive unit (100) to be rotated together with the drive unit, and including at least one groove (171b to 174b, 171c, 171d, 172c) disposed in the radial direction; and
a switch (162, 162a, 162b, 162c, 162d) disposed to contact the cam, and locked with and unlocked from the at least one groove to generate an ON signal and an OFF signal when the cam is rotated.

10. The washing machine according to one of the previous claims, wherein this further comprises a cabinet (10), a tub (20) disposed within the cabinet (10) to store water, and said drum (30) disposed within the tub (20) to accommodate laundry.

## Patentansprüche

1. Waschmaschine (1) mit einer Trommel (30) zur Aufnahme von Wäsche, einer Waschmittelzuführvorrichtung (50), die ein Waschmittelgehäuse (53), das das äußere Erscheinungsbild der Waschmittelzuführvorrichtung (50) bildet, eine Waschmittelgehäuseabdeckung (51), die so angeordnet ist, dass sie den oberen Abschnitt des Waschmittelgehäuses (53) abdeckt und einen Spender (52), der zwischen dem Waschmittelgehäuse (53) und der Waschmittelgehäuseabdeckung (51) angeordnet ist umfasst, wobei der Spender (52) mit einer Vielzahl von Kanälen (521, 522, 523, 524) versehen ist, um einer Vielzahl von Waschmitteln, die der Trommel (30) zuzuführen sind, Wasser zuzuführen, und einer Wasserzuführvorrichtung, umfassend:
zwei Wasserzuführleitungen (60), von denen die eine eine Warmwasserzuführleitung und die andere eine Kaltwasserzuführleitung ist, die sich von einem hinteren Abschnitt der Waschmaschine (1) bis zur Waschmittelzuführvorrichtung (50) erstrecken, um dem Spender kaltes und warmes Wasser zuzuführen;
eine Düse (200), die mit einem Ende an die Wasserzuführleitungen (60) angeschlossen ist und deren anderes Ende in der Nähe der Eingänge der Vielzahl von Kanälen (521 bis 524) angeordnet ist und die drehbar ist, um Wasser wahlweise einem der Vielzahl von Kanälen zuzuführen;
eine Antriebseinheit (100), die eine Antriebskraft zum Drehen der Düse (200) erzeugt, und
eine Rotationssteuervorrichtung (150) zum Steuern der Rotation der Antriebseinheit, wobei die Düse (200) umfasst:
einen breiten einzelnen Einlass (220), der benachbart zu den beiden Wasserzuführleitungen (60) vorgesehen ist, so dass Wasser durch den Einlass (220) in die Düse eingeleitet wird, und einen einzelnen Auslass (230) zum Zuführen von Wasser zu einem der zahlreichen Kanäle (521 bis 524), wobei der Einlass (220) eine Fläche aufweist, die größer als der einzelne Auslass (230) ist und ausreicht, um zwei Verbindungsleitungen (515) abzudecken, mit denen die beiden Wasserzuführleitungen (60) verbunden sind, wobei die Verbindungsleitungen (515) aus dem hinteren Abschnitt der Waschmittelgehäuseabdeckung (51) herausragen, die Warmwasserzuführleitung mit einer der beiden Verbindungsleitungen (515) verbunden ist und die Kaltwasserzuführleitung mit der anderen der beiden Verbindungsleitungen (515) verbunden ist, so dass Kaltwasser und Warmwasser, die von den beiden Wasserzuführleitungen zugeführt werden, durch den breiten einzelnen Einlass (220) in die Düse (200) und durch den einzelnen Auslass (230) aus der Düse (200) zu jedem der Kanäle (521 bis 524) wahlweise eingeleitet werden können.

2. Waschmaschine nach Anspruch 1, bei der der Auslass (230) eine kleinere Fläche aufweist als die Einlässe der zahlreichen Kanäle, um Wasser in einen der zahlreichen Kanäle zu leiten.

3. Waschmaschine nach Anspruch 1, bei der:
die Düse (200) Düsenseitenwände (240) aufweist, die beide Seitenflächen des Einlasses (220) und des Auslasses (230) bilden; und
die Düsenseitenwände (240) in einer gekrümmten Linie von dem Einlass zu dem Auslass ausgebildet sind.

4. Waschmaschine nach Anspruch 1, bei der die Antriebseinheit (100) einen Motor (140) umfasst.

5. Waschmaschine nach Anspruch 4, bei der die Antriebseinheit (100) weiterhin eine Vielzahl von Zahnrädern (181 bis 183) aufweist, die zwischen dem Motor (140) und der Düse (200) angeordnet sind, um die Antriebskraft des Motors auf die Düse zu übertragen.

6. Waschmaschine nach Anspruch 5, bei der die Vielzahl von Zahnrädern umfasst: ein erstes Zahnrad (181), das mit der Düse (200) verbunden ist und zusammen mit der Düse gedreht wird; und ein zweites Zahnrad (183), das mit dem Motor (140) verbunden ist und durch die Antriebskraft des Motors gedreht wird.

7. Waschmaschine nach Anspruch 1, bei der:
die Düse (200) drehbar in der Waschmittelzufuhrvorrichtung (50) untergebracht ist; und
die Antriebseinheit (100) auf der Oberseite der Waschmittelzufuhrvorrichtung (50) angeordnet ist.

8. Waschmaschine nach Anspruch 1, bei der die Rotationssteuervorrichtung (150) umfasst:
eine Nocke (170), die mit der Antriebseinheit (100) verbunden ist, um zusammen mit der Antriebseinheit gedreht zu werden, und die wenigstens eine vorstehende Rippe (171a bis 175a) aufweist, die in der Zentrifugalrichtung vorsteht; und
einen Schalter (162, 162a, 162b, 162c, 162d), der derart angeordnet ist, dass er die Nocke (170) berührt, und der mit der wenigstens einen vorstehenden Rippe (171a bis 175a) verriegelt und von ihr entriegelt wird, um ein EIN-Signal und ein AUS-Signal zu erzeugen, wenn die Nocke gedreht wird.

9. Waschmaschine nach Anspruch 1, bei der die Rotationssteuervorrichtung (150) umfasst:
eine Nocke (170), die mit der Antriebseinheit (100) verbunden ist, um zusammen mit der Antriebseinheit gedreht zu werden, und die wenigstens eine in der radialen Richtung angeordnete Rille (171b bis 174b, 171c, 171d, 172c) aufweist; und
einen Schalter (162, 162a, 162b, 162c, 162d), der so angeordnet ist, dass er die Nocke berührt, und der mit der wenigstens einen Rille verriegelt und von ihr entriegelt wird, um ein EIN-Signal und ein AUS-Signal zu erzeugen, wenn die Nocke gedreht wird.

10. Waschmaschine nach einem der vorhergehenden Ansprüche, wobei diese weiterhin ein Gehäuse (10), eine in dem Gehäuse (10) angeordnete Wanne (20) zur Aufnahme von Wasser und die in der Wanne (20) angeordnete Trommel (30) zur Aufnahme von Wäsche umfasst.

## Revendications

1. Machine à laver (1) avec un tambour (30) pour recevoir le linge, un appareil d'alimentation en détergent (50) comprenant une caisse à détergent (53) formant l'apparence externe de l'appareil d'alimentation en détergent (50), un couvercle de caisse à détergent (51) disposé pour couvrir la partie supérieure de la caisse à détergent (53), et un distributeur (52) disposé entre la caisse à détergent (53) et le couvercle de caisse à détergent (51), dans lequel le distributeur (52) est pourvu d'une pluralité de canaux (521, 522, 523, 524) pour alimenter en eau une pluralité de détergents à fournir au tambour (30) et un appareil d'alimentation en eau comprenant:
deux tuyaux d'alimentation en eau (60), l'un étant un tuyau d'alimentation en eau chaude et l'autre étant un tuyau d'alimentation en eau froide, s'étendant depuis une partie arrière de la machine à laver (1) jusqu'à l'appareil d'alimentation en détergent (50) pour fournir de l'eau froide et chaude au distributeur;
une buse (200) munie d'une extrémité reliée aux tuyaux d'alimentation en eau (60) et l'autre extrémité disposée de façon adjacente aux entrées de la pluralité de canaux (521 à 524) et pouvant tourner pour fournir de l'eau sélectivement à l'un de la pluralité de canaux;
une unité d'entraînement (100) générant une force d'entraînement pour faire tourner la buse (200), et
un dispositif de commande de rotation (150) pour commander la rotation de l'unité d'entraînement, dans lequel la buse (200) comprend
une entrée unique large (220) prévue de manière adjacente aux deux tuyaux d'alimentation en eau (60) de sorte que l'eau est introduite dans la buse à travers l'entrée (220), et une sortie unique (230) pour fournir de l'eau à l'un de la pluralité de canaux (521 à 524), laquelle entrée (220) a une surface plus grande que la sortie unique (230) et suffisante pour couvrir deux tuyaux de connexion (515) auxquels les deux tuyaux d'alimentation en eau (60) sont connectés, les tuyaux de connexion (515) faisant saillie de la partie arrière du couvercle du boîtier de détergent (51), dans lequel le tuyau d'alimentation en eau chaude est connecté à l'un des deux tuyaux de connexion (515) et le tuyau d'alimentation en eau froide est connecté à l'autre des deux tuyaux de connexion (515), de manière à permettre à l'eau froide et à l'eau chaude fournies par les deux tuyaux d'alimentation en eau d'être introduites dans la buse (200) par la large entrée unique (220) et de sortir de la buse (200) par la sortie unique (230) vers chacun des canaux (521 à 524), de manière sélective.

2. Machine à laver selon la revendication 1, dans laquelle la sortie (230) a une surface plus petite que les entrées de la pluralité de canaux pour alimenter en eau l'un de la pluralité de canaux.

3. Machine à laver selon la revendication 1, dans laquelle:
la buse (200) comprend des parois latérales de buse (240) formant les deux surfaces latérales de l'entrée (220) et de la sortie (230); et
les parois latérales de la buse (240) sont formées en ligne courbe de l'entrée à la sortie.

4. Machine à laver selon la revendication 1, dans laquelle l'unité d'entraînement (100) comprend un moteur (140).

5. Machine à laver selon la revendication 4, dans laquelle l'unité d'entraînement (100) comprend en outre une pluralité d'engrenages (181 à 183) disposés entre le moteur (140) et la buse (200) pour transmettre la force d'entraînement du moteur à la buse.

6. Machine à laver selon la revendication 5, dans laquelle la pluralité d'engrenages comprend:
un premier engrenage (181) relié à la buse (200) et tournant avec la buse; et
un second engrenage (183) relié au moteur (140) et tournant par la force d'entraînement du moteur.

7. Machine à laver selon la revendication 1, dans laquelle:
la buse (200) est logée de manière rotative dans le dispositif d'alimentation en détergent (50); et
l'unité d'entraînement (100) est disposée sur la surface supérieure du dispositif d'alimentation en détergent (50).

8. Machine à laver selon la revendication 1, dans laquelle le dispositif de commande de rotation (150) comprend:
une came (170) reliée à l'unité d'entraînement (100) pour être mise en rotation avec l'unité d'entraînement, et comprenant au moins une nervure en saillie (171a à 175a) faisant saillie dans la direction centrifuge; et
un commutateur (162, 162a, 162b, 162c, 162d) disposé pour entrer en contact avec la came (170), et verrouillé avec et déverrouillé de ladite au moins une nervure saillante (171a à 175a) pour générer un signal MARCHE et un signal ARRET lorsque la came est tournée.

9. Machine à laver selon la revendication 1, dans laquelle le dispositif de commande de rotation (150) comprend:
une came (170) reliée à l'unité d'entraînement (100) pour être tournée avec l'unité d'entraînement, et comprenant au moins une rainure (171b à 174b, 171c, 171d, 172c) disposée dans la direction radiale; et
un commutateur (162, 162a, 162b, 162c, 162d) disposé pour entrer en contact avec la came, et verrouillé avec et déverrouillé de ladite au moins une rainure pour générer un signal ON et un signal OFF lorsque la came est tournée.

10. Machine à laver selon l'une des revendications précédentes, dans laquelle cette dernière comprend en outre une armoire (10), une cuve (20) disposée à l'intérieur de l'armoire (10) pour stocker l'eau, et ledit tambour (30) disposé à l'intérieur de la cuve (20) pour recevoir le linge.
